# EUROPÄISCHE PATENTSCHRIFT

(11) **EP 0 554 536 B1**
(45) Veröffentlichungstag und Bekanntmachung des Hinweises auf die Patenterteilung: **19.03.1997**
(21) Anmeldenummer: 92120390.7
(22) Anmeldetag: 28.11.1992
(51) Int. Cl.: A21D 2/26, A21D 8/04

(54) **Verfahren zur Herstellung von Backwaren**
Method for the production of bake products
Procédé de production de produits de boulangerie

(30) Priorität: 01.02.1992 DE 4202879
(43) Veröffentlichungstag der Anmeldung: 11.08.1993
(73) Patentinhaber: Deutsche Hefewerke GmbH & Co. oHG, 22041 Hamburg (DE)
(72) Erfinder: Chiu, Chung-Wai, Dr., W-2000 Hamburg 70 (DE); Gassner, Jens, W-2104 Hamburg 92 (DE)
(74) Vertreter: UEXKÜLL & STOLBERG

(56) Entgegenhaltungen:
- EP-A- 0 262 669
- DE-A- 3 440 733
- US-A- 4 206 243

## Beschreibung

Die Erfindung betrifft ein neues Verfahren zur Herstellung von Backwaren mit verbesserter Frischhaltung.

Bedingt durch die industrielle Herstellung von Backwaren, die Handelsstruktur und die veränderten Einkaufsgewohnheiten ist eine gewisse Lagerungszeit zwischen der Produktion und dem Verzehr unvermeidlich. Während der Lagerung treten häufig Qualitätsveränderungen der Backwaren ein, die den Genuß der Waren beeinträchtigen. Wesentliche Veränderungen sind der Aromaverlust und das Altbackenwerden der Backwaren.

Der Aromaverlust wird durch das Ausdiffundieren von flüchtigen Aromaverbindungen und durch chemische Reaktionen - unter anderem auch Oxidation - verursacht.

Das Altbackenwerden umfaßt die Veränderungen der Kruste und des Krumengefüges der Backwaren während der Lagerung. Kruste und Krume werden fester, die Krume verliert ihre Saftigkeit und Elastizität. Wesentlich verantwortlich für dieses Phänomen ist die Retrogradation der Stärke, die Entquellung der Stärke durch Übergang vom amorphen in einen quasi-kristallinen Zustand.

Seit einigen Jahren sind Mittel und Wege bekannt und beschrieben, die Frischhaltung von Backwaren zu verbessern. So wird die Frischhaltung von Backwaren durch die Lagerung in einer Frischhaltekammer bei einer Temperatur von 30 bis 50 °C positiv beeinflußt. Transportunternehmen, Einzelhandel und Verbraucher haben jedoch nicht die Möglichkeit, ein solch aufwendiges und mit einigen Investitionen verbundenes Verfahren anzuwenden.

H.-G. Ludewig, Brot und Backwaren, 9, 256-259 (1988), beschreibt eine Vielzahl von herkömmlichen Frischhaltemitteln, die eingesetzt werden können, um die Frischhaltung zu verlängern. Solche Frischhaltemittel sind z. B. Fett, Eigelb oder Emulgatoren wie Lecithine, Mono- oder Diglyceride von Speisefettsäuren, Verdickungsmittel wie Johannisbrotkernmehl, Getreidegrütze, Zuckeralkohole oder Enzyme.

Durch Einsatz von Emulgatoren zusammen mit Fett in größeren Mengen kann der Geschmack von Weißbrot negativ beeinflußt werden. Auch ist die Wirkung sehr stark von der Qualität des Mehles abhängig. Außerdem ist nur eine begrenzte Anzahl von Emulgatoren allgemein für Backwaren zugelassen.

Frischhaltezeiten von mehreren Tagen kann man durch den Einsatz von Enzymen wie α-Amylase erzielen. Enzyme sind jedoch sehr temperaturempfindlich, sie werden beim Backen zu einem großen Teil inaktiviert. Die Methode, Backwaren durch Enzyme frisch zu halten, versagt deshalb sehr leicht bei Dosierfehlern oder bei backtechnischen Fehlern. Eine Überdosierung von α-Amylase führt zu einem weichen, breitlaufenden Produkt.

Diese Methode kann nach US 4 654 216 durch den Einsatz einer Enzymkombination aus α-Amylase und Pullulanase verbessert werden. Bei dieser Methode müssen in der Praxis die Einsatzmenge und die Einwirkzeit gut auf die Mehlqualität abgestimmt werden. Dies verlangt zusätzliche Aufmerksamkeit in dem Herstellungsbetrieb.

Eine Aufgabe der Erfindung ist es, ein Verfahren zur Herstellung von Backwaren bereitzustellen, bei dem eine Frischhaltung von mehreren Tagen gewährleistet werden kann. Dabei sollte eine wenig temperaturempfindliche Substanz eingesetzt werden. Eine andere Aufgabe ist es, ein Verfahren zu entwickeln, das bei Dosier- und Backfehlern gutmütig reagiert und nicht sofort zu einer Qualitätsverschlechterung der Backwaren führt. Schließlich sollten zuzusetzende Frischhaltemittel den Geschmack der Backwaren nicht beeinträchtigen.

Diese Aufgaben werden überraschend durch den Einsatz von Hefezellschalen bei der Herstellung von Backwaren gelöst. Hefezellschalen sind dabei die Produkte, die nach einer Inaktivierung der Hefezellen und nach Entfernung der löslichen und leicht verdaulichen Komponenten aus den Hefezellen zurückbleiben.

Zur Herstellung der Zellschalen können die verschiedensten Hefen eingesetzt werden. Geeignet sind beispielsweise Hefen der Gattungen Saccharomyces, Candida, Kluyveromyces, Torulopsis, Hansenula, Metschnikowia, Pachysolen, Pichia, Rhodotorula und Schizosaccharomyces. Dabei werden Zellschalen von Hefen der Gattungen Saccharomyces, Candida und Kluyveromyces vorzugsweise verwendet.

Die Hefezellschalen können direkt in den Teig eingerührt werden oder mit Backmitteln vermischt in den Teig gegeben werden. Vorzugsweise werden die Hefezellschalen jedoch dem Teig direkt zugesetzt. Im allgemeinen werden 0,1 bis 15 Gewichtsprozent Hefezellschalen, bezogen auf das eingesetzte Mehl, zugegeben. Dabei werden Mengen von 0,2 bis 10 Gewichtsprozent besonders bevorzugt. Für Roggen- und Weizenmischbrot werden meist 1 bis 6 Gewichtsprozent Hefezellschalen zugesetzt. Für Vollkornbrot reichen mitunter schon 0,5 bis 1 Gewichtsprozent Hefezellschalen, um die gewünschte Frischhaltung zu erreichen. Bei Sauerteigbackwaren und Weizensauerbackwaren können die Hefezellschalen vor oder nach der Versäuerung dem Teig zugesetzt werden.

Geeignete Backwaren sind beispielsweise Brote, Kekse, Kuchen oder Pizzas. Die Hefezellschalen werden dabei vorzugsweise für Brote eingesetzt.

Neben den Hefezellschalen können auch übliche Frischhaltemittel, wie Emulgatoren, Verdickungsmittel, Fette oder Enzyme, zugemischt werden.

Die Anzucht der Hefen, aus denen Hefezellschalen hergestellt werden sollen, kann nach bekannten Verfahren erfolgen.

Die Inaktivierung und die Entfernung der leicht verdaulichen und löslichen Hefezellkomponenten können ebenfalls nach bekannten Verfahren durchgeführt werden. Die Inaktivierung kann beispielsweise durch Autolyse, mechanischen Aufschluß, Thermolyse, Plasmolyse und enzymatischen Aufschluß erfolgen. Vorzugsweise wird durch Autolyse inaktiviert. Die so inaktivierten bzw. aufgeschlossenen Hefezellen werden dann von den verdauten und löslichen Komponenten getrennt. Dieses kann zum Beispiel durch Extraktion oder durch Waschen erfolgen. Die zurückgebliebenen unlöslichen Hefezellschalen werden gründlich mit Wasser gewaschen, um sie weitgehend von den anhaftenden löslichen und verdauten Komponenten zu befreien, da diese Komponenten den Geschmack und die Teigbeschaffenheit negativ beeinflussen können.

Die so erhaltenen Hefezellschalen können dann in Pulver-, Pastös- oder Flüssigform in verschiedenen Backrezepturen eingesetzt werden. Je nach Backrezeptur können durch den Einsatz diese Hefezellschalen die Teigausbeute, der Geschmack und die Frischhaltung verbessert werden.

Frischhaltungen von 7 Tagen und mehr werden erreicht. Da die Hefezellschalen im Vergleich zu Enzymen sehr temperaturbeständig sind, führen kleinere backtechnische Fehler oder falsche Dosierungen nur zu geringen qualitativen Veränderungen der Backwaren.

Die folgenden Beispiele sollen die Erfindung verdeutlichen.

### Beispiel 1

### Herstellung von Hefezellschalen

Bäckerhefe (Saccharomyces cerevisiae) wird auf Melasse-Nährmedium bei pH 5 und 30 °C angezüchtet. Die gewonnene Hefe wird durch Separation und Waschung mit Wasser von Nährstoffresten befreit.

Die so erhaltene Hefemilch wird wie folgt zur Autolyse gebracht:
Die Hefemilch wird auf pH 5 eingestellt. Anschließend wird die Temperatur über einen Zeitraum von 5 Stunden auf 55 °C gebracht und danach bei dieser Temperatur 24 Stunden gehalten. Die Hefemilch-Temperatur wird dann für weitere 15 Stunden auf 70 °C angehoben. Anschließend werden die von den Hefezellen gelösten Komponenten durch Separation von den ungelösten Teilen getrennt. Die ungelösten Teile werden mit Wasser gewaschen, um die anhaftende lösliche Substanz weitestgehend zu entfernen.

Die auf diese Art und Weise erhaltenen Hefezellschalen können direkt oder nach der Trocknung als Brot-Frischhaltemittel dem Teig zugeführt werden.

In den folgenden Beispielen werden Hefezellschalen als getrocknetes Pulver eingesetzt.

### Beispiel 2

### Herstellung von Toastbrot

### Folgende Rezeptur wird angewandt:

| | a | b | c | d |
|---|---|---|---|---|
| Weizenmehl, Type 550 (kg) | 1,0 | 1,0 | 1,0 | 1,0 |
| Toastbackmittel (kg) | 0,07 | 0,07 | 0,07 | 0,07 |
| Salz (kg) | 0,02 | 0,02 | 0,02 | 0,02 |
| Fett (kg) | 0,04 | 0,04 | 0,04 | 0,04 |
| Bäckerhefe (kg) | 0,04 | 0,04 | 0,04 | 0,04 |
| Wasser (l) | 0,580 | 0,590 | 0,600 | 0,620 |
| Hefezellschalen (kg) | - | 0,005 | 0,01 | 0,02 |
| Teigtemperatur: 29 °C Teigruhe: 2 x 10 Minuten Gärzeit: 45 Minuten bei 34 °C und 85 % relativer Luftfeuchtigkeit Backzeit: 40 Minuten, obere Hitze 230 bis 240 °C, untere Hitze 240 °C | | | | |

### Beurteilung:

- Porenbild:: Bei den Versuchen b bis d ist das Porenbild gleichmäßiger als bei Versuch a.
- Krumenelastizität:: Die Krume ist bei den Versuchen b bis d elastischer als bei Versuch a. Das beste Ergebnis liefert Versuch c (Test: "Daumendruckmethode")
- Organoleptik:: Das Toastbrot ist bei den Versuchen mit Hefezellschalen geschmackvoller. Bei Einsatz von 2 % ist ein leichter urtypischer Geschmack festzustellen.

### Lagertest:

Die Brote werden nach der Abkühlung in Folien eingewickelt und bei 20 °C gelagert. Beurteilt wird nach dem 1., 3. und 7. Tag.
Während der Versuch a schon nach drei Tagen sehr trocken erscheint, bleiben die anderen noch relativ feucht und elastisch, besonders die Versuche mit höheren Einsatzmengen.
Nach dem 7. Tag können die Versuche b, c und d noch als akzeptabel bezeichnet werden.

### Beispiel 3

### Herstellung von Roggenmischbrot (Sauerteigverfahren)

### Rezepturen und Bedingungen:

1. Stufe:

| | a | b | c |
|---|---|---|---|
| Roggenmehl, Type 997 (kg) | 1,00 | 1,00 | 1,00 |
| Wasser (l) | 1,00 | 1,50 | 2,25 |
| Starterkultur (kg) | 0,01 | 0,01 | 0,01 |
| Hefezellschalen (kg) | - | 0,20 | 0,50 |
| Anfangstemperatur: 35 °C Stehzeit: 24 Stunden | | | |

2. Stufe:

| | a | b | c |
|---|---|---|---|
| Roggenmehl, Type 997 (kg) | 1,00 | 1,00 | 1,00 |
| Wasser (l) | 1,00 | 1,00 | 1,00 |
| Sauerteig (1. Stufe) (kg) | 2,00 | 2,20 | 2,50 |
| Anfangstemperatur: 30 °C Stehzeit: 24 Stunden | | | |

### Teigrezeptur:

| | a | b | c |
|---|---|---|---|
| Sauerteig (2. Stufe) (kg) | 4,00 | 4,00 | 4,00 |
| Roggenmehl, Type 997 (kg) | 6,00 | 6,00 | 6,00 |
| Weizenmehl, Type 1050 (kg) | 2,00 | 2,00 | 2,00 |
| Salz (kg) | 0,18 | 0,18 | 0,18 |
| Hefe (kg) | 0,20 | 0,20 | 0,20 |
| Wasser (l) | 5,00 | 5,00 | 5,00 |
| Teigtemperatur: 28 °C Teigruhe: 1 x 10 Minuten Stückgare: 45 Minuten bei 34 °C und 85 % rel. Luftfeuchtigkeit Backzeit: 50 Minuten Backtemperatur: 260/240 °C | | | |

### Beurteilung: (frisch)

Die Versuche b und c mit Zusatz von Hefezellschalen weisen eine höhere Teigausbeute auf. Die Teige haben einen besseren Stand.
- Porenbild:: Alle Versuche ergeben ein ähnliches gleichmäßiges Porenbild.
- Krumenelastizität:: Die Versuche b und c zeichnen sich durch eine elastischere Krume aus. Das gilt besonders für Brote aus Versuch c.
- Organoleptik:: Die Brote der Versuche b und c sind geschmackvoller und würziger als von Versuch a. Die Kaueigenschaften sind gegenüber dem Versuch a verbessert. Eine Säurespitze ist bei Versuch a festzustellen.

### Lagerung:

Die Brote werden in Papier eingewickelt und 3 Wochen lang bei 22 °C gelagert. Getestet wird nach der 1., 2. und 3. Woche.
Krumenelastizität: Schon nach einer Woche wird die Krume bei Versuch a trocken, während die Krume der Versuche b und c noch feucht und elastisch erscheint. Nach der zweiten Woche hält sich der Verlust an Feuchte und Elastizität der Versuche b und c noch in Grenzen. Nach der dritten Woche wird die Krume bei Versuch b trocken und unelastisch, während bei der Krume von Versuch c noch eine gewisse Feuchtigkeit und Elastizität vorhanden ist.
Der Genußwert der Brote aus Versuch c nach 3 Wochen kann als akzeptabel bezeichnet werden.
Stärkerer Schimmelbefall wird bei b und c nicht festgestellt.

### Beispiel 4

### Herstellung von Roggenmischbrot mit Teigsäuerungsmittel

### Rezepturen und Bedingungen:

| | a | b | c |
|---|---|---|---|
| Roggenmehl, Type 997 (kg) | 8,00 | 8,00 | 8,00 |
| Weizenmehl, Type 1050 (kg) | 2,00 | 2,00 | 2,00 |
| Salz (kg) | 0,18 | 0,18 | 0,18 |
| Hefe (kg) | 0,20 | 0,20 | 0,20 |
| Teigsäuerungsmittel (kg) | 0,05 | 0,05 | 0,05 |
| Wasser (l) | 7,00 | 7,50 | 8,25 |
| Hefezellschalen*) (kg) | - | 0,20 | 0,50 |

| | | | |
|---|---|---|---|
| *) Typ HCT, Fa. Ohly GmbH, D-4370 Marl | | | |
| Teigtemperatur: 28 °C Teigruhe: 1 x 10 Minuten Stückgare: 45 Minuten bei 34 °C und 85 % rel. Luftfeuchtigkeit Backzeit: 50 Minuten Backtemperatur: 260/240 °C | | | |

### Beurteilung:

Die Versuche mit Hefezellschalen ergeben eine höhere Teigausbeute und auch einen besseren Teigstand.
- Porenbild:: Alle Versuche ergeben eine gleichmäßige, feine Porenverteilung.
- Krumenelastizität:: Versuch a ergibt insgesamt eine relativ trockene Krume.
- Organoleptik:: Eine starke Säurespitze und ein unangenehmer Beigeschmack sind bei Versuch a feststellbar, während die Versuche b und c geschmackvolle und milde Brote liefern. Die Kaueigenschaft ist bei b und c als optimal zu bezeichnen.

### Lagerung:

Die Brote werden in Papier eingewickelt und 3 Wochen lang bei 22 °C gelagert. Getestet wird nach der 1., 2. und 3. Woche.
Krumenelastizität: Nach einer Woche wird die Krume bei Versuch a sehr trocken und unelastisch. Der Genußwert dieser Brote ist schon zweifelhaft. Brote aus den Versuchen b und c wirken noch frisch und elastisch und sind voll genießbar. Nach der zweiten Woche sind die Brote aus den Versuchen b und c weniger feucht und elastisch, aber noch gut genießbar. Das gilt besonders für Brote von Versuch c.
Erst nach 3 Wochen wirken die Brote aus Versuch b hart und unelastisch. Brote aus Versuch c behalten noch eine bemerkbare Feuchte und Elastizität; sie sind noch genießbar.
Verstärkter Schimmelbefall wird bei b und c nicht festgestellt.

### Beispiel 5

### Herstellung von Roggenvollkornbrot mit Teigsäuerungsmittel

### Rezeptur und Bedingungen:

### Quellstück:

| | a | b | c |
|---|---|---|---|
| Roggenschrot, grob (kg) | 5,00 | 5,00 | 5,00 |
| Wasser (l) | 5,00 | 5,00 | 5,00 |
| Salz (kg) | 0,08 | 0,08 | 0,08 |
| Stehzeit: 15 Stunden bei 22 °C | | | |

### Teigrezeptur:

| | a | b | c |
|---|---|---|---|
| Quellstück (kg) | 10,08 | 10,08 | 10,08 |
| Roggenschrot, grob (kg) | 5,00 | 5,00 | 5,00 |
| Teigsäuerungsmittel (kg) | 0,15 | 0,15 | 0,15 |
| Hefe (kg) | 0,05 | 0,05 | 0,05 |
| Salz (kg) | 0,10 | 0,10 | 0,10 |
| Wasser (l) | 3,00 | 3,20 | 3,30 |
| Hefezellschalen (kg) | -- | 0,10 | 0,15 |
| Teigtemperatur: 28 °C 1. Knetung: 30 Minuten Teigruhe: 30 Minuten 2. Knetung: 30 Minuten Teigeinlage: 1,50 kg Stückgare: 60 Minuten Backzeit: 1,5 Stunden Backtemperatur: 250 bis 180 °C abfallend | | | |

### Beurteilung:

Die Versuche b und c mit Zusatz von Hefezellschalen weisen eine höhere Teigausbeute auf.
- Porenbild:: Die Versuche b und c ergeben ein gleichmäßiges und etwas lockeres Porenbild. Bei Versuch a sind die Poren ungleichmäßig verteilt.
- Krumenelastizität:: Die Versuche b und c weisen eine elastischere und saftigere Krume auf. Das gilt besonders für Brote aus Versuch c.
- Schnittfestigkeit:: Alle Versuche zeichnen sich durch eine gute Schnittfestigkeit aus.
- Organoleptik:: Brote aus Versuch a haben einen säuerlichen, leicht bitteren, nicht abgerundeten Geschmack. Brote aus den Versuchen b und c sind würziger, geschmackvoller. Eine unangenehme Säurespitze ist bei den Versuchen b und c nicht festzustellen. Die Kaugeigenschaften sind gegenüber Broten aus Versuch a überlegen.

### Lagerung:

Die Brote werden in Folien eingewickelt und 2 Wochen lang bei 22 °C gelagert. Getestet wird nach der 1. und 2. Woche.
Krumenelastizität: Nach einer Woche Lagerung ist bei Versuch a eine stärkere Austrocknungserscheinung festzustellen als bei den Versuchen b und c. Die Austrocknung verstärkt sich nach 2 Wochen. Sie ist dann bei einem Vergleich der aufgeschnittenen Brote der Versuche a, b und c sogar optisch feststellbar.
Nach 2 Wochen sind Brote aus den Versuchen b und c voll genießbar. Stärkerer Schimmelbefall wird bei b und c nicht festgestellt.

## Patentansprüche

1. Isolierte Hefezellschalen, erhältlich durch Inaktivierung von Hefezellen und Entfernen der löslichen und leicht verdaulichen Komponenten, zur Herstellung von Backwaren.

2. Hefezellschalen nach Anspruch 1,
dadurch gekennzeichnet,
daß man Schalen von Hefezellen der Gattungen Saccharomyces, Candida und Kluyveromyces verwendet.

3. Verfahren zur Herstellung von Backwaren, dadurch gekennzeichnet, daß man dem Teig Hefezellschalen zusetzt, wobei die Hefezellschalen durch Inaktivierung der Hefezellen und Entfernen der löslichen und leicht verdaulichen Komponenten hergestellt sind.

4. Verfahren nach Anspruch 3,
dadurch gekennzeichnet,
daß man, bezogen auf das eingesetzte Mehl, 0,1 bis 15 Gewichtsprozent Hefezellschalen zusetzt.

5. Verfahren nach Anspruch 4,
dadurch gekennzeichnet,
daß 0,2 bis 10 Gewichtsprozent Hefezellschalen eingesetzt werden.

## Claims

1. Isolated yeast cell walls, obtainable by inactivating yeast cells and removing the soluble and easily digestible components, for producing bakery products.

2. Yeast cell walls according to Claim 1, characterized in that yeast cell walls of the genera Saccharomyces, Candida and Kluyveromyces are used.

3. Process for producing bakery products, characterized in that yeast cell walls are added to the dough, the yeast cell walls being produced by inactivating the yeast cells and removing the soluble and easily digestible components.

4. Process according to Claim 3, characterized in that 0.1 to 15 per cent by weight of yeast cell walls are added, based on the flour used.

5. Process according to Claim 4, characterized in that 0.2 to 10 per cent by weight of yeast cell walls are used.

## Revendications

1. Enveloppes cellulaires de levure isolées pouvant être obtenues par inactivation des cellules de levure et élimination des constituants solubles et facilement digestibles, pour la production de produits de boulangerie.

2. Enveloppes cellulaires de levure selon la revendication 1, caractérisées en ce qu'on utilise des enveloppes de cellules de levure des espèces Saccharomyces, Candida et Kluyveromyces.

3. Procédé de production de produits de boulangerie, caractérisé en ce qu'on ajoute des enveloppes cellulaires de levure à la pâte, lesquelles enveloppes cellulaires de levure sont produites par inactivation des cellules de levure et élimination des constituants solubles et facilement digestibles.

4. Procédé selon la revendication 3, caractérisé en ce qu'on ajoute 0,1 à 15 % en poids d'enveloppes cellulaires de levure, par rapport à la farine employée.

5. Procédé selon la revendication 4, caractérisé en ce que 0,2 à 10 % en poids d'enveloppes cellulaires de levure sont utilisés.
